# EUROPEAN PATENT APPLICATION

(11) **EP 3 904 114 A1**
(43) Date of publication of application: **03.11.2021**
(21) Application number: 21170142.0
(22) Date of filing: 23.04.2021
(51) Int. Cl.: B44C 1/18, B41M 3/00, B41M 1/12, B44C 3/02, B44C 5/06

(54) **PRINTING PROCESS AND PLANT MAKING USE OF GRANULAR NATURAL ORGANIC MATERIAL**

(30) Priority: 30.04.2020 IT 202000009598
(71) Applicant: Grafiche Bramucci S.r.l., 20099 Sesto San Giovanni (MI) (IT)
(72) Inventor: Bramucci, Francesca, 20099 Sesto San Giovanni (MI) (IT); Pintucci, Francesco, 20831 Seregno (MI) (IT)
(74) Representative: Mati, Silvia

(57) **Abstract**

The present invention relates to a printing process (1000; 2000; 3000; 4000) which is characterized by comprising the steps of applying (1010) a layer of adhesive material on a surface of a substrate, wherein the adhesive material is arranged on the substrate in a pre-set pattern; depositing (1030) by gravity a printing preparation on the substrate surface, wherein the printing preparation comprises at least a plurality of granular organic printing elements, such as plant seeds; and drying (1070; 3010) the adhesive material, thereby fixing the printing elements to the adhesive material.

## Description

### TECHNICAL FIELD

The present invention relates to the printing field. In particular, the present invention relates to a printing process and a related plant making use of granular natural organic material, such as for example seeds of one or more plants, as a printing preparation, for example to define a texture, a design or an inscription on a surface of a substrate.

### BACKGROUND

To date, various printing techniques are known that differ in their implementation depending on the different printing preparations - such as inks, fibres or other - that are intended to be used to achieve specific aesthetic or tactile effects, in association with different substrates on which to apply the printing - for example, paper, fabric, plastic, etc.

One printing technique known to date is offset printing. The offset printing process is of the indirect type and is based on the phenomenon of chemical/physical repulsion between water and grease-based ink. This printing technique provides first for applying a film of dampening water onto an aluminium plate - in itself hydrophilic and previously treated so as to create lipophilic and water-repellent graphisms thereon - wound on a cylinder. The water therefore wets only the areas of the plate without graphism, precisely defining the contours of the graphisms. Grease-based inks are then applied to the plate, adhering only to the dry part of the plate (i.e. the graphism). The plate then transfers the images to a rubberised fabric called caoutchouc, which by its nature receives the ink but not the water and through which the graphism is then transferred to a printing sheet or substrate

Another well-known printing technique is flexographic printing - also known as flexo - which is suitable for use on a wide variety of substrates, from packaging material to newsprint paper. This printing technique provides for applying ink by means of a printing roller - known as Anilox roller - typically made of steel or ceramic. A plurality of cells is formed on the outer surface of the Anilox roller - typically comprising a number of cells ranging from 80 to 800 per centimetre. In detail, the cells are first loaded with varnish by means of an inkwell and then the Anilox roller is used to transfer the varnish onto a relief matrix, typically flexible and soft, through which the graphism is then transferred onto the printing sheet

A further particularly versatile printing technique is screen printing. Screen printing provides for the use of a screen printing frame on which an ink-permeable area corresponding to the graphism to be printed is defined. The ink is placed on top of the screen printing frame, which, by acting with a squeegee that runs along its surface, lets a quantity of varnish pass through the permeable area and be deposited on the printing sheet.

The Applicant has set itself the objective of obtaining a new and peculiar aesthetic and tactile printing effect, wishing to make use of a natural organic material of a substantially granular type, in particular plant seeds, as a printing preparation.

In addition to the new aesthetic printing effect, the Applicant has set itself the objective of creating printing objects which - once their primary function has been exhausted - could be reused for planting plants, thus contributing to the ecological recycling thereof.

However, the Applicant has found that none of the known technical solutions allows to obtain a printing that makes use of a granular natural organic material as a printing preparation.

For example, in the case of flexographic printing, the ink containing cells are usually too small to accommodate the granular material with a typical particle size of the plant seeds and at the same time to ensure an acceptable printing resolution, for example, in terms of dots per unit area or unit length.

Similar considerations apply to screen printing. In this case, the meshes of the screen printing fabric are usually too small to allow the passage of printing preparations comprising granular material, such as plant seeds, and at the same time to ensure an acceptable printing resolution.

Last but not least, the chemical/physical repulsion phenomenon on which the offset printing process is based is not suitable for the transfer of solid granular substances such as plant seeds.

In addition, most of the inks and fixing procedures used in known printing techniques to date can have negative effects on seed viability. In particular, the toxic substances generally contained in the inks, in addition to the operating conditions under which traditional printing techniques operate, such as operating temperature and/or mechanical pressure exerted by the printing rollers or squegees, can lead to the cancellation of the ability of the plant seeds used in association with traditional printing preparations to germinate.

### OBJECTS AND SUMMARY OF THE INVENTION

An object of the present invention is to overcome the disadvantages of the prior art.

In particular, it is an object of the present invention to provide a printing process and relative plant that allows using a granular organic material, such as plant seeds, as a printing preparation.

It is a further object of the present invention to propose a printing process and plant which allows to make use of a granular organic material, such as plant seeds, as a printing preparation without damaging its viability and ability to germinate.

It is another object of the present invention to devise a printing process and plant which allows binding a plurality of plant seeds to a substrate according to a graphism, a pattern and/or a surface design.

Furthermore, it is an object of the present invention to propose a printing object comprising a substrate on which a plurality of plant seeds is fixed according to a set graphism, pattern and/or surface design so that - once its primary function has been exhausted - the printing object can be reused for planting plants.

In particular, herein the term 'graphism' refers to one or more letters or ideograms, lines, geometric Figures, a drawing and/or a combination thereof.

A further object of the present invention is to propose a substrate made of a biodegradable material comprising a surface comprising a graphism, a seed-printed pattern and/or covered with seeds capable of germinating once the substrate is placed in the soil.

These and other objects of the present invention are achieved by a printing process incorporating the features of the annexed claims, which form an integral part of the present description.

According to a first aspect, the printing process implementable by means of a printing plant comprising at least one screen printing station, at least one station for deposition of a printing preparation, at least one drying station and at least one transport element configured to transport a substrate from one station to the next one along a transport direction, comprises the steps consisting of:
- applying by screen printing a layer of adhesive material on a surface of a substrate using the at least one screen printing station, wherein the adhesive material is arranged on the substrate in a pre-set pattern;
- depositing by gravity a printing preparation on the substrate surface by the at least one printing preparation deposition station, the printing preparation comprising a plurality of granular organic printing elements, such as plant seeds;
- drying the adhesive material by means of the at least one drying station, thereby fixing the printing elements to the adhesive material.

Thanks to this solution, it is possible to print a graphism, a pattern, a drawing and so on, with a printing preparation containing granular natural organic material, such as plant seeds, without damaging their vitality.

In fact, the graphism, the design or the pattern are outlined through the application of the adhesive material in specific areas, allowing for the use of traditional printing techniques. Once the adhesive material has been deposited according to the particular pattern, the granular organic material can be simply applied by falling, minimizing chemical contamination and/or mechanical stresses experienced by the material itself.

In this way a printing is obtained with an original aesthetic appearance conferred by the particular characteristics of the granular organic material, unique for each seed used. In addition, printing in this way allows to associate an exclusive tactile experience for each printing made, not obtainable with other materials. What is more, once its primary function has been exhausted, the thus made printing object can be reused for planting plants.

In an embodiment, the deposition station comprises a tank and a sieve, wherein the sieve is coupled to the tank so as to engage an opening thereof facing the transport element, the step of depositing by gravity a plurality of seeds comprising:
sifting the plurality of printing elements by means of the sieve interposed between the tank of the plurality of printing elements and the surface of the substrate, wherein the sieve comprises meshes or holes having a regular polygon shape or circular shape, organized in rows and columns or with a radial distribution.

In this way, it is possible to drop the printing elements substantially constantly, particularly in the case of plant seeds, achieving a homogeneous distribution of the printing elements on the surface of the substrate. This makes it possible to produce even and uniform printed surfaces.

Preferably, the sieve comprises substantially square meshes with a side equal to at least 1.5 times the average particle size of the printing elements, more preferably to at least 3 times the average particle size of the printing elements. For example, the meshes have a side comprised between 1 mm and 1.2 mm, preferably equal to 1.11 mm.

Otherwise, the sieve comprises holes having a diameter equal to at least 1.5 times the average particle size of the printing elements, preferably equal to at least 3 times the average particle size of the printing elements.

As will be apparent to the skilled person, the term 'particle size' or 'average particle size' means an average diameter of the printing elements, in particular of the plant seeds, which can be identified as the diameter of the minimum sphere capable of containing the printing element or the minimum size of the mesh opening of a sieve that the printing elements are capable of crossing.

The Applicant has defined that these particular structures of the sieve in the form of a grid or perforated plate with appropriate sizes of the through openings make it possible to obtain a distribution of printing elements, in particular of the plant seeds, of compatible sizes such as to obtain a density of printing elements per unit area that corresponds to a high printing resolution, suitable for producing easily intelligible symbols.

In an embodiment, the step of depositing by gravity a plurality of printing elements comprises:
- subjecting the sieve to vibratory stress by means of a movement element included in the deposition station, or
- scraping a surface of the sieve facing the tank by means of a brush, said brush preferably rotating around an axis parallel to said surface of the sieve.

The stress or scraping operations of the sieve allow to obtain a uniform flow of printing elements, in particular in the case of plant seeds, which are deposited on the surface of the substrate by gravity, avoiding occlusions of the meshes or through holes.

In an embodiment, the process further comprises the step of:
- subjecting said substrate to vibratory stress after deposition of said plurality of printing elements, in particular plant seeds, and before drying the adhesive layer, thereby allowing at least part of said plurality of printing elements to penetrate at least partially into the adhesive layer.

The Applicant has determined that this operation causes at least partial penetration of the printing elements, particularly in the case of plant seeds, into the layer of adhesive material. As a result, the printing elements are particularly firmly coupled to the adhesive layer. In addition, the Applicant has determined that the vibratory stresses allow for a greater regularity in the distribution of the printing elements coupled to the layer of adhesive material. Finally, the vibratory stress of the substrate allows for the removal of any printing elements from the surface that have not coupled to the layer of adhesive material.

In an embodiment, the step of applying a layer of adhesive material to a surface of a substrate comprises:
- applying an adhesive layer with a thickness comprised between 20% and 70%, preferably between 33% and 66%, of an average particle size of the printing elements, preferably equal to at least 100 µm.

The Applicant has determined that a layer of such thickness allows to reliably fix the printing elements, particularly in the case of plant seeds. In particular, the minimum thickness indicated is suitable for plant seeds with an average size greater than or equal to 200 µm.

In an embodiment, the step of applying a layer of adhesive material to a surface of a substrate comprises:
- depositing the layer of adhesive material by screen printing.

The Applicant has determined that the deposition of the adhesive material by screen printing is particularly effective, precise and economical.

Preferably, depositing the layer of adhesive material by screen printing comprises:
- using a screen printing fabric comprising between 10 threads per centimetre and 30 threads per centimetre, preferably comprised between 12 threads per centimetre and 24 threads per centimetre, even more preferably substantially equal to 14 threads per centimetre wherein the threads have a thickness comprised between 130 µm and 150 µm, preferably equal to 140 µm, and
- using a volume of adhesive material comprised between 90 cm³ and 190 cm³, more preferably comprised between 104 cm³ and 175 cm³, per square metre of surface to be covered.

The Applicant has identified that these characteristics of the screen printing fabric and of the volume of adhesive material used allow for a precise deposition of the adhesive layer that is particularly suitable for the coupling with plant seeds.

In an embodiment, the process further comprises the step of:
- imprinting a bas-relief shaped so as to correspond to said pre-set pattern.

Preferably, the bas-relief has a depth equal to at least 33% of the average particle size of the printing elements, more preferably comprised between 33% and 75% of the average particle size of the printing elements, and less than 80% of the thickness of the substrate, even more preferably less than 75% of the thickness of the substrate.

In such a case, the step of applying a layer of adhesive material to a surface of a substrate comprises applying the layer of adhesive material at said bas-relief.

Thanks to this solution, it is possible to obtain thicker adhesive layers and a more precise control of the application thereof, for example, in case of complex printing patterns. Moreover, the bas-relief allows to reduce, at least partially, the protrusion of the printing with organic elements, compared to the surface of the substrate on which the printing is made, making the printing more resistant to wear.

In an embodiment, the step of drying the adhesive material provides for:
- partially drying the adhesive material, and
the process further provides for the step of:
- exerting pressure on the printing elements after said partial drying of the adhesive material by means of a calendering station located downstream of the drying station with respect to the transport direction, thereby causing further penetration of the printing elements into the layer of adhesive material.

This allows obtaining a higher penetration of the printing elements, particularly plant seeds, within the layer of adhesive material, improving the fixing of the printing element to the substrate.

In an embodiment, the step of drying the adhesive material comprises:
- drying the adhesive material by means of a flow of air at a temperature comprised between 50° C and 90° C.

Preferably, the step of drying the adhesive material includes drying the adhesive material by means of a flow of air with a temperature equal to 80° C to obtain a total drying of the adhesive material, or equal to or less than 70° C to obtain a partial drying of the adhesive material.

Such temperatures allow the adhesive material to dry without compromising the viability of organic printing elements, particularly in the case of plant seeds, ensuring that they are able to germinate at a later date.

In an embodiment, the process further comprises the steps of:
- depositing a layer of fibres, preferably biodegradable, on the surface of said substrate, after the deposition of said plurality of printing elements by means of a flocking station located downstream of the deposition station with respect to the transport direction, and
- removing an excess of said fibres, preferably biodegradable, from the surface of said substrate, before drying the adhesive material.

Thanks to this solution, it is possible to confer additional aesthetic and tactile characteristics to the printing produced by this process, obtaining a final product that alternates rough and velvety areas.

In an embodiment, said printing elements comprise a plurality of plant seeds having an average particle size comprised between 100 µm and 700 µm, preferably comprised between 200 µm and 500 µm, even more preferably comprised between 300 µm and 400 µm.

Such sizes of the plant seeds allow to obtain good quality printings, in particular, with a good resolution in terms of dots per unit of measure and, moreover, they allow to realize particularly attractive visual and tactile patterns.

Preferably, said plurality of plant seeds comprises seeds of the genus *trifolium,* preferably of the species *trifolium ripens,* for example dwarf clover.

The Applicant has determined that such a genus and species of plants allows obtaining a printing with the characteristics considered above, further allowing corresponding plants to be grown with a pattern dictated by the printing graphism once the substrate is placed in the soil. As a result, the substrate allows plants to be grown according to a desired pattern, creating flowerbeds with even complex conformation in a simple and economical way.

Preferably, the substrate is made of a biodegradable material and the adhesive material is of the biodegradable type.

A different aspect of the present invention proposes a printing plant comprising:
- a screen printing station configured to deposit a layer of adhesive material on a surface of a substrate;
- at least one deposition station of a printing preparation comprising a plurality of granular organic printing elements, such as plant seeds, configured to deposit a plurality of printing elements on the surface of said substrate;
- a drying station configured to dry the layer of adhesive material, and
- a transport element configured to transport said substrate from one station to the next one along a transport direction.

Advantageously, the plant is configured to implement the process according to any of the previously considered embodiments.

The plant thus constructed enables the above advantages to be obtained in relation to the process according to the present invention.

In a variant of the invention, the deposition station of a printing preparation comprising a plurality of granular organic printing elements, such as plant seeds, comprises a tank and a sieve, wherein the sieve is coupled to the tank so as to engage an opening thereof facing the transport element, the sieve comprising
- substantially square meshes with a side equal to at least 1.5 times the average particle size of the printing elements, more preferably to at least 3 times the average particle size of the printing elements, or
- holes having a diameter equal to at least 1.5 times the average particle size of the printing elements, preferably equal to at least 3 times the average particle size of the printing elements.

In a variant of the invention, the deposition station of a printing preparation comprises a movement element configured to set the sieve in vibration.

In a variant of the invention, at an outlet of the drying station or directly downstream thereof with respect to the transport direction, the plant comprises a calendering station configured to exert pressure along a direction orthogonal to the transport direction on the plurality of printing elements deposited on the surface of the substrate.

In a variant of the invention, the plant comprises a punching station located upstream of the screen printing station with respect to the transport direction and comprising a punch configured to imprint a bas-relief on the substrate, corresponding to the pre-set pattern.

In a variant of the invention, the plant comprises a flocking station located downstream of the deposition station and configured to deposit portions of fibre by gravity.

Still one aspect of the present invention proposes a printing object comprising a biodegradable substrate onto which a plurality of plant seeds is fixed according to a graphism, a pattern and/or a surface design determined by the printing process described above.

Further features and advantages of the present invention will be more apparent from the description of the accompanying drawings.

### BRIEF DESCRIPTION OF THE DRAWINGS

The invention will be described below with reference to some examples, provided for explanatory and non-limiting purposes, and illustrated in the accompanying drawings. These drawings illustrate different aspects and embodiments of the present invention and, where appropriate, reference numbers illustrating similar structures, components, materials and/or elements in different Figures are indicated by similar reference numbers.
Figure 1 is a schematic representation of a printing plant according to a first embodiment of the present invention, in which some intermediate processings obtained through said plant are additionally illustrated;
Figure 2 is a flowchart of a printing process according to an embodiment of the present invention implementable by the plant of Figure 1;
Figure 3 is a schematic representation of a printing plant in accordance with a second embodiment of the present invention, in which some intermediate processings obtained through said plant are additionally illustrated;
Figure 4 is a flowchart of a printing process in accordance with a second embodiment of the present invention implementable by the plant of Figure 3;
Figures 5A - 5C are schematic side section views of a substrate during corresponding steps of the printing process in Figure 4;
Figure 6 is a schematic representation of a printing plant according to a third embodiment of the present invention, in which some intermediate processings obtained through said plant are additionally illustrated;
Figure 7 is a flowchart of a printing process according to a third one embodiment of the present invention implementable by the plant of Figure 6;
Figures 8A - 8C are schematic side section views of a substrate during corresponding steps of the printing process in Figure 7;
Figure 9 is a schematic representation of a printing plant according to a fourth embodiment of the present invention, in which some intermediate processings obtained through said plant are additionally illustrated; and
Figure 10 is a flowchart of a printing process according to a fourth embodiment of the present invention implementable by the plant of Figure 9.

### DETAILED DESCRIPTION OF THE INVENTION

While the invention is susceptible to various modifications and alternative constructions, certain preferred embodiments are shown in the drawings and are described hereinbelow in detail. It is in any case to be noted that there is no intention to limit the invention to the specific embodiment illustrated, rather on the contrary, the invention intends covering all the modifications, alternative and equivalent constructions that fall within the scope of the invention as defined in the claims.

The use of "for example", "etc.", "or" indicates non-exclusive alternatives without limitation, unless otherwise indicated. The use of "includes" means "includes, but not limited to" unless otherwise stated.

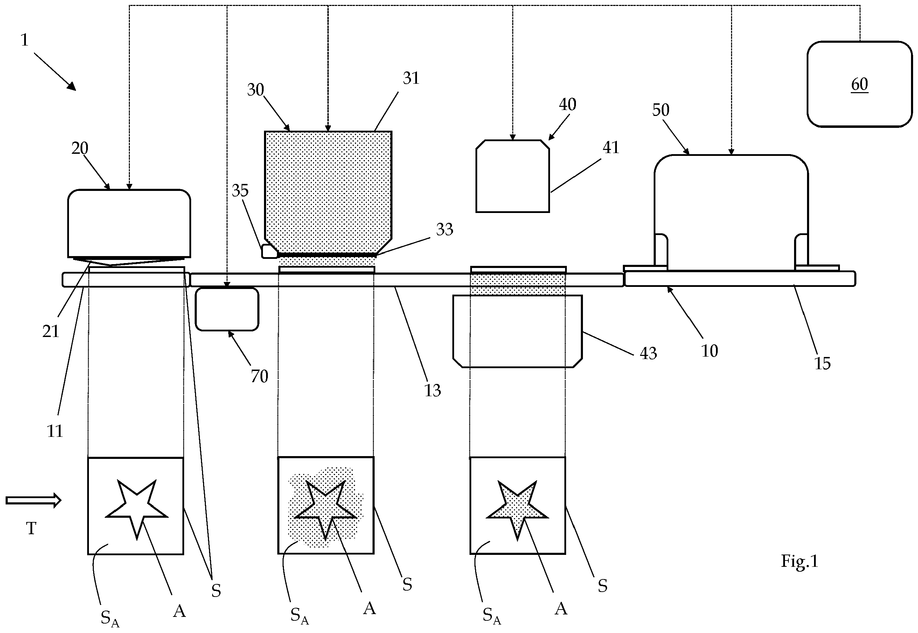

With reference to Fig. 1 a printing plant 1 making use of granular natural organic material, such as for example seeds of one or more plants, according to a first embodiment of the present invention is illustrated.

In detail, the plant 1 comprises a conveyor belt 10 for advancing a substrate S along a transport direction (T), made in the shape of a plate-like body in the example considered. The substrate S is arranged on the conveyor belt 10 such that a surface S_{A} on which printing is desired remains exposed, i.e., faces in a direction opposite the conveyor belt 10.

Preferably, the substrate S is made of a biodegradable material, for example paper, cardboard or corrugated board, a compostable and/or biodegradable polymeric material, a fabric or nonwoven fabric made of biodegradable fibres, etc. "Compostable and/or biodegradable polymeric material" means a plastic material without polymers of polyolefin derivation, also known as "bioplastic" or "biopolymer".

The conveyor belt 10 transports the substrate S through the plant 1 so as to cross, sequentially, a plurality of process stations. In the example considered in Figure 1, the process stations crossed by the substrate S are, in order of crossing, an adhesive material deposition station - preferably a screen printing station 20 -, a deposition station of printing elements made of granular natural organic material - in particular, a seed deposition station 30 -, a station for removal and recovery 40 of an excess of seeds and a drying station 50. Finally, the plant 1 provides for a control unit 60.

The screen printing station 20 is configured to deposit a layer of adhesive material A on the surface S_{A} of the substrate S, in particular according to a pre-set printing pattern - a graphism corresponding to a star in the example of Figure 1.

In detail, the screen printing station 20 is configured to deposit the layer of adhesive material having a thickness comprised between 20% and 70%, preferably between 33% and 66%, of an average particle size of the seed used. Advantageously, the thickness of the adhesive material must be sufficient to receive a portion of the seed having a thickness equal to at least 20%, more preferably equal to at least 33%, of the average particle size of the seed used. For example, the thickness of the adhesive layer is equal to about 100 µm using seeds having an average particle size comprised between 300 µm and 400 µm.

The screen printing station 20 comprises a screen printing fabric 21 on which the desired printing pattern (not illustrated) is defined. In embodiments of the present invention, the screen printing fabric 21 comprising between 10 threads per centimetre and 30 threads per centimetre, more preferably comprised between 12 threads per centimetre and 24 threads per centimetre, wherein the threads have a thickness comprised between 130 µm and 150 µm, preferably equal to 140 µm. For example, the screen printing fabric comprises 14 threads per centimetre with a thread thickness equal to 140 µm in an embodiment configured to use seeds having an average particle size comprised between 300 µm and 400 µm.

Preferably, the adhesive material is water-based and, even more preferably, is biodegradable. In an embodiment, the adhesive material comprises an organic thickener, for example an organic flour such as for example tamarind flour, guar flour and/or corn flour.

Further, the screen printing station 20 is configured to use a volume of adhesive material comprised between 40 cm³ and 250 cm³, preferably comprised between 90 cm³ and 190 cm³, even more preferably comprised between 104 cm³ and 175 cm³, per square meter of surface to be covered.

The conveyor belt 10 is configured to transport the substrate S through the screen printing station 20 in a direction substantially parallel to the screen printing fabric 21 and such that the surface S_{A} of the substrate is in proximity to the screen printing fabric 21 to receive the adhesive material.

Preferably, the conveyor belt 10 comprises a first portion 11 configured to keep the substrate S in a printing position at the screen printing station 20 for the duration of a screen printing step - described below - and, then, to transfer the substrate to a second portion 13 of the conveyor belt 10. The second portion 13 of the conveyor belt 10 is preferably configured to transport the substrate S through the stations 30 and 40, while maintaining a constant feed rate.

The seed deposition station 30 comprises a tank 31 and a sieve 33. In detail, the tank 31 is configured to house the seeds with which printing is carried out. Furthermore, the sieve 33 is coupled to the tank 31 so as to engage an (lower) opening thereof, i.e., an opening facing the conveyor belt 10, so that the surface S_{A} of the substrate S faces the sieve 33 when the substrate S passes through the seed deposition station. In particular, the conveyor belt 10 is at a lower position in elevation than the sieve 33, so that the seeds can be deposited by gravity on the substrate S. Preferably, the sieve 33 coupled to the tank 31 results substantially parallel to the conveyor belt 10 and to the substrate S when it passes through the seed deposition station 30.

According to a first alternative, the sieve 33 is made in the form of a grating comprising meshes with the shape of a regular polygon organized in rows and columns or, alternatively, with a radial distribution. In particular, the mesh size of the sieve 33 is defined as a function of the size of the seeds to be deposited and possibly as a function of the density of seeds that it is desired to be deposited on the substrate S. In an embodiment suitable for the deposition of plant seeds having an average particle size comprised between 100 µm and 700 µm, preferably between 200 µm and 500 µm, even more preferably between 300 µm and 400 µm- for example seeds of plants belonging to the genus *trifolium,* such as *trifolium ripens,* in particular dwarf clover - the sieve comprises substantially square meshes, with a side size comprised between 1 mm and 1.2 mm, preferably equal to about 1.11 mm

In accordance with a second alternative, the sieve 33 is configured in the form of a perforated plate comprising a number of holes per unit of measure such as to ensure a desired density of seeds falling by gravity onto the substrate S. In general, the plate has holes with a diameter greater than the average particle size of the seeds to be deposited, for example the diameter of the holes is equal to at least 1.5 times the average particle size of the seeds, preferably equal to at least 3 times the average particle size of the seeds. Furthermore, the number of holes per centimetre of the perforated plate is selected as a function of the average particle size of the seeds used for printing and of the desired density of seeds to be deposited on the surface S_{A} of the substrate S, in particular on the layer of adhesive material.

In an exemplary embodiment, the Applicant has determined that a uniform seed distribution can be obtained by using a grating or a perforated plate comprising between 45 and 55 meshes/holes per cm², preferably 49 meshes/holes per cm², in the case of seeds with an average diameter comprised between 200 µm and 500 µm, preferably comprised between 300 µm and 400 µm.

In the illustrated embodiment, the seed deposition station 30 comprises a movement element 35, such as, for example, an actuator configured to set the sieve 33 in vibration so as to allow a constant flow of seeds through the sieve 33.

According to an alternative embodiment (not illustrated), the movement element is a rotating brush comprising a plurality of brush elements extending radially from a rotation axis of the brush. In particular, the rotation axis of the brush is parallel to the plane defined by the sieve, when coupled to the tank. Furthermore, a radial extension of the brush elements substantially corresponds to the distance between the rotation axis of the brush and the sieve surface facing the inside of the tank. In this way, by rotating, the brush facilitates the passage of the seeds through the openings (meshes or holes) in the sieve.

One or more mechanical actuators 70 configured to subject the second portion 13 of the conveyor belt 10 to mechanical stress, such as vibration, are also provided. Such mechanical actuators 70 are activated at least when the substrate S is at the seed deposition station 30.

The Applicant has observed that such stresses facilitate at least partial penetration of the seeds into the layer of adhesive material A, allowing for improved fixing of the seeds to the layer of adhesive material A. In particular, the Applicant has determined that the stresses allow ensuring that the seeds are immersed in the adhesive material A for at least one quarter, more preferably for at least one third, of the average particle size of the seeds.

The excess seed removal and recovery station 40 comprises a blower element 41 configured to generate a flow of air incident on the surface S_{A} of the substrate S such as to cause seeds not associated with the layer of adhesive material A to fall off the substrate S. In addition, the removal and recovery station 40 also comprises a seed recovery element 43 configured to receive the seeds removed from the substrate and, preferably, to convey them back to the tank 31 of the seed delivery station 30, for example by means of a pneumatic circuit (not illustrated).

The drying station 50 is configured to subject the transiting substrate S on a third portion 15 of the conveyor belt 10 to drying. In particular, the drying station 50 is configured to cause curing of the layer of adhesive material A deposited on the surface S_{A} of the substrate. Preferably, the substrate S is subjected to a temperature comprised between 70° to 90° C, preferably equal to 80° C, for a period of time comprised between 30 seconds to 120 seconds, preferably equal to 60 seconds.

In a preferred embodiment, the drying station 50 is configured to dry the adhesive material by means of a flow of air with a temperature not higher 90° C, preferably not higher 80° C. For example, the drying station 50 comprises a hot air oven.

Finally, the control unit 60 is configured to control the operation and proper functioning of the stations 20 - 50, as well as of the conveyor belt 10. Preferably, the control unit 60 also controls any apparatus for loading and/or unloading substrates onto/from the conveyor belt 10. For this purpose, the control unit 60 comprises one or more of processors, microprocessors and microcontrollers, a non-volatile memory and/or a volatile memory, at least one bus or other link for exchanging data with other elements of the plant 1 and, preferably, a user interface for receiving instructions and providing information to an operator of the plant 1.

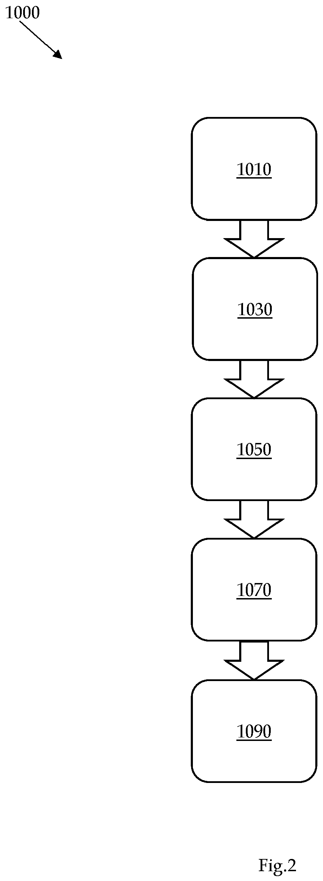

Having described the structure of the plant 1 for printing with seeds according to an embodiment of the present invention, a process 1000 for printing with plant seeds - illustrated in Figure 2 - is now described according to an embodiment that can be implemented by means of the plant 1.

Initially, a layer of adhesive material A, preferably water-based, is applied on the surface S_{A} of the substrate S according to the pre-set printing pattern (block 1010). Preferably, a layer of adhesive material A with a thickness comprised between 20% and 70%, preferably between 33% and 66%, of an average particle size of the seed used is deposited. Advantageously, the thickness of the adhesive material must be sufficient to receive a seed portion with thickness equal to at least 20%, more preferably 33%, of the average particle size of the seed used for printing.

In particular, the thickness of the layer of adhesive material A is also selected as a function of the characteristics of the substrate S - for example, a grammage and a capacity to absorb water, etc. in the case of a paper or cardboard substrate - and of the characteristics of the adhesive material A used - for example, percentage of water content, etc.

In the case of the plant 1, the layer of adhesive material is deposited by means of the screen printing station 20. As is known to the skilled person in the art, a squeegee (not illustrated) of the screen printing station 20 presses the screen printing fabric 21 against the surface S_{A}, allowing the adhesive material to pass through the screen printing fabric 21 at only the printing pattern defined on the screen printing fabric 21 itself, thereby depositing the layer of adhesive material A.

Subsequently, a plurality of plant seeds are deposited on the surface S_{A} of the substrate S (block 1030), whereby at least a portion of the seeds cover the layer of adhesive material A on the surface S_{A}. In the case of plant 1, the seed deposition station 30 substantially uniformly releases a plurality of seeds through the sieve 33 which reach by gravity the surface S_{A} of the transiting substrate S through the seed deposition station 30.

The substrate S is mechanically stressed (block 1050) by subjecting the conveyor belt 10 to mechanical vibrations by means of the mechanical actuators 70, thereby allowing at least part of the seeds to penetrate at least partially into the adhesive layer A. In the case of the plant 1, the substrate S is subjected to vibration at least while crossing the seed deposition station 30.

Excess plant seeds - i.e., not in contact with the adhesive layer A - are therefore removed from the surface S_{A} of the substrate S (block 1070). In the case of the plant 1 this operation is carried out by the removal and recovery station 40.

Finally, the adhesive material is dried (block 1090), thereby fixing the seeds to the solidified adhesive material. Preferably, drying includes heating the substrate S and, in particular, the adhesive material A deposited on the surface S_{A} of the substrate S at a temperature lower than 90°, for example comprised between 70° and 90° C, preferably equal to 80° C, for a period of time comprised between 30 seconds and 120 seconds, preferably equal to 60 seconds. Even more preferably, drying includes using a flow of fluid, for example air, at a temperature comprised between 70° and 90° C, preferably equal to 80° C. In the case of the plant 1, drying is obtained while crossing the drying station 40 by the substrate S.

Thus, the substrate S presents the desired printing pattern on the surface S_{A} printed with the seeds. Subsequently, the substrate S may be stored or subjected to other processing - for example, die-cutting and folding operations so as to make a box-shaped element.

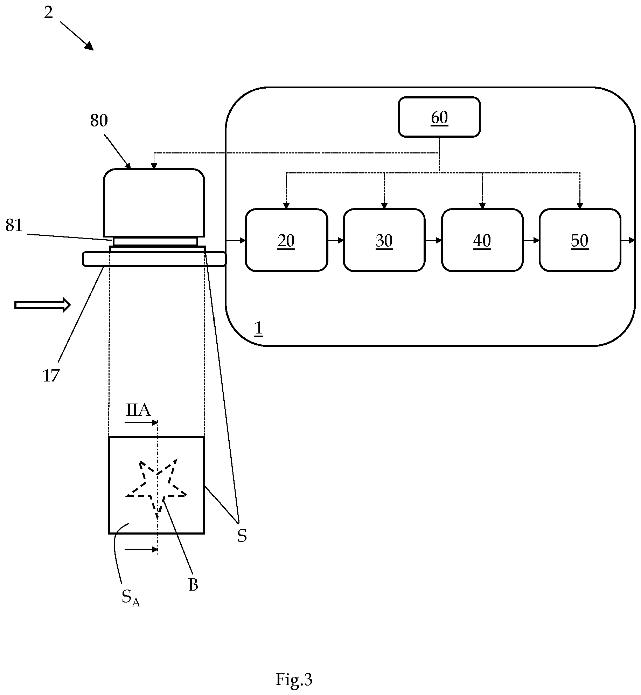

In a second embodiment illustrated schematically in Figure 3, the plant 2 comprises a punching station 80 located at an initial position of the plant 2, in particular upstream, with respect to the flowing direction of the substrate S, of the screen printing station 20.

In particular, plant 2 differs from plant 1 just described as follows, where elements similar to elements described above in relation to plant 1 are indicated by the same references and their description is not repeated for brevity' sake.

The punching station 80 comprises a punch 81 suitable for imprinting a bas-relief B of the desired graphism on the substrate S. In particular, the bas-relief B produced by the punching station 80 is a depression in the substrate S shaped substantially corresponding to the graphism to be printed. Advantageously, the bas-relief B produced by the punching station 80 has a depth equal to at least 33% of the average particle size of the seed, preferably comprised between 55% and 100% of the average particle size of the seed, but not exceeding 75% of the thickness of the substrate S.

Further, the conveyor belt 10 includes a portion 17 configured to position the substrate S in a punching position and to transfer it to the next screen printing station 20 once the punching of the substrate S has been performed.

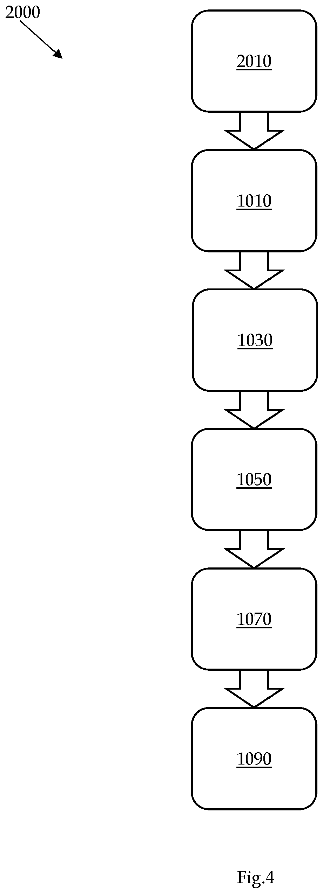

Figure 4 illustrates a flowchart of a plant seed printing process 2000 according to an embodiment executable by means of the plant 2 just described. Said printing process 2000 differs from the process 1000 described above as follows, where operations similar to the steps described above in relation to the process 1000 are indicated by the same reference numerals and their description is not repeated for brevity's sake.

The process 2000 includes preliminarily punching the substrate S (block 2010) before the same substrate S is subjected to screen printing (block 1010) and, subsequently, to the further steps described above. In particular, the punching includes making a bas-relief B. The bas-relief is preferably made with a depth equal to at least 33% of the average particle size of the seed, more preferably comprised between 33% and 75% of the average particle size of the seed, but without exceeding 80%, preferably 75%, of the thickness of the substrate S. This makes it possible, among other things, to increase the thickness of the layer of adhesive material deposited by screen printing (block 1010).

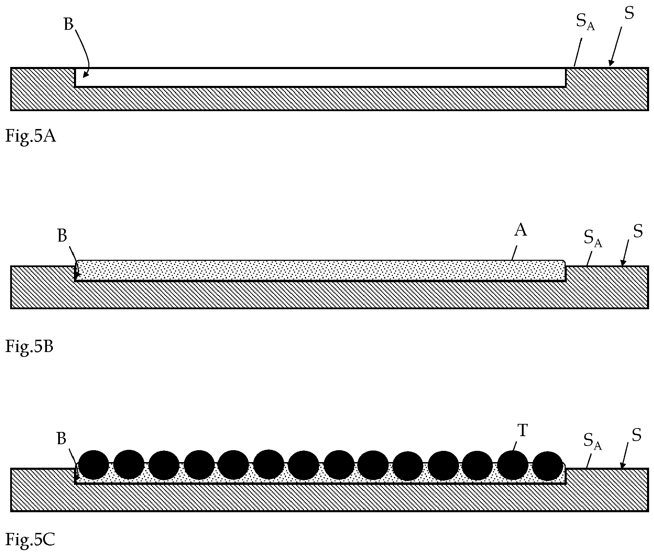

As schematically illustrated in the example of Figures 5A - 5C, the bas-relief B imprinted in the substrate S (Figure 5A) allows the adhesive material A deposited by the screen printing station 20 (Figure 5B) to be effectively collected. Furthermore, the printing made by depositing the seeds T (Figure 5C) at the bas-relief B appears to protrude less from the surface S_{A} than a printing made on a substrate S without the bas-relief. In other words, the punching of the substrate S makes it possible to obtain a particularly precise and resistant printing with seeds.

Thus, the substrate S presents the desired printing pattern on the surface S_{A} printed with the seeds. Subsequently, the substrate S may be stored or subjected to other processing - for example, die-cutting and folding operations so as to make a box-shaped element.

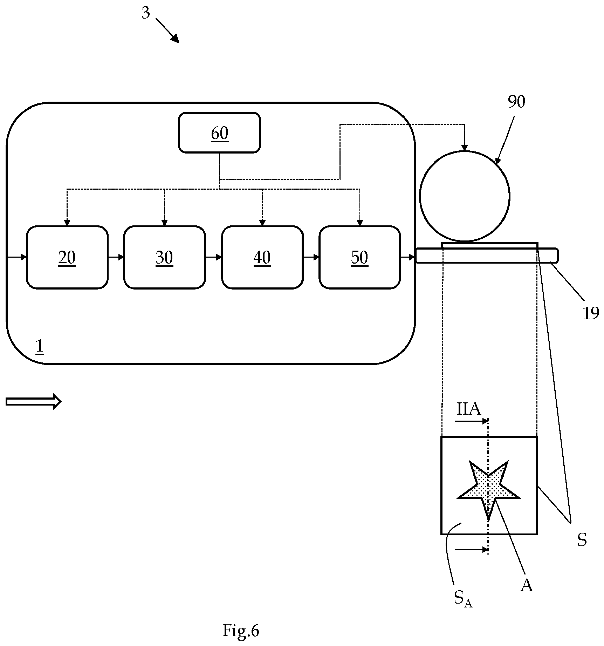

In a third embodiment illustrated schematically in Figure 6, the plant 3 comprises a calendering station 90 located in a final position of the plant, in particular at the outlet of the drying station 50 or directly downstream of the drying station 50, with respect to the flowing direction of the substrate S.

In particular, plant 3 differs from plant 1 and plant 2 described above as follows, where elements similar to elements described above in relation to plant 1 or plant 2 are indicated by the same references and their description is not repeated for brevity's sake.

In the case of the plant 3, the drying station 50 is configured to operate at a temperature generally lower than the temperature used in the case of the plant 1, preferably comprised between 50° C and 70° C, for a duration substantially corresponding to 60 seconds.

Further, the calendering station 90 is configured to exert pressure on the seeds deposited on the not fully dried adhesive material A. In this way, it is possible to ensure that the seeds further penetrate into the adhesive material A, achieving an increased fixation.

Preferably, downstream of the calendering operation, the seeds are immersed into the adhesive material to a depth equal to a value comprised between 30% and 75% of the average particle size of the seeds, more preferably comprised between 33% and 66% of the average particle size of the seeds.

Finally, the conveyor belt 10 includes a portion 19 configured to transport the substrate S at a pre-set, preferably constant, speed through the calendering station 90.

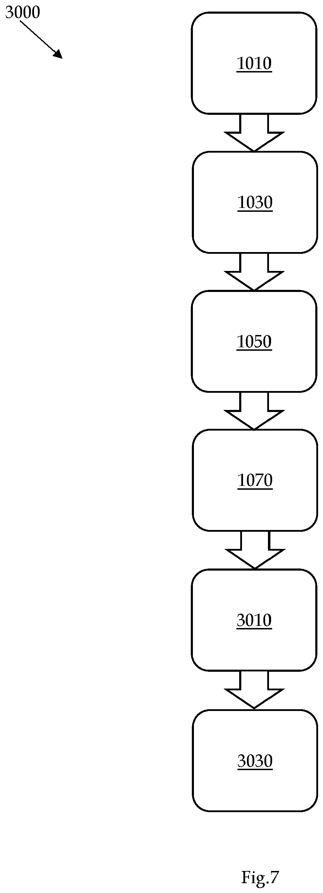

Figure 7 illustrates a flowchart of a plant seed printing process 3000 according to an embodiment executable by means of the plant 3 just described. Said printing process 3000 differs from processes 1000 and 2000 described above as follows, where operations similar to the steps described above in relation to the processes 1000 and 2000 are indicated by the same reference numerals and their description is not repeated for brevity's sake.

The printing process 3000 includes performing the same operations 1010 - 1070 described above. Thereafter, a partial drying step (block 3010) of the adhesive material A deposited on the surface S_{A} of the substrate S takes place instead of the substantially total drying step described in connection with operation 1090 of the process 1000.

Preferably, it is envisaged heating the substrate S to a temperature comprised between 50° C and 70° C, for a duration substantially corresponding to 60 seconds. Even more preferably, it is envisaged using a flow of fluid, for example air, at a temperature comprised between 50° C and 70° C to heat the substrate S and to partially dry the adhesive material A. In the case of the plant 3, this operation is carried out by the drying station 50. For example, the partial drying operation includes reducing a mass of water in the adhesive material to a percentage comprised between 50% and 70% of the initial mass.

Once the partial drying step is ended, the seeds coupled to the adhesive material A are subjected to pressure so as to further penetrate inside the adhesive material A (block 3030), without, however, altering the graphism printed with plant seeds.

Preferably, the seeds are allowed to penetrate the adhesive material A to a depth having a value comprised between 30% and 75% of the average particle size of the seeds, more preferably comprised between 33% and 66% of the average particle size of the seeds. In the case of the plant 3 this operation is carried out by the calendering station 90.

Thus, the substrate S presents the desired printing pattern on the surface S_{A} printed with the seeds. Thereafter, the adhesive material A is dried naturally or in a forced manner to complete drying. The substrate S may therefore be stored or subjected to other processing - for example, die-cutting and folding operations so as to make a box-shaped element.

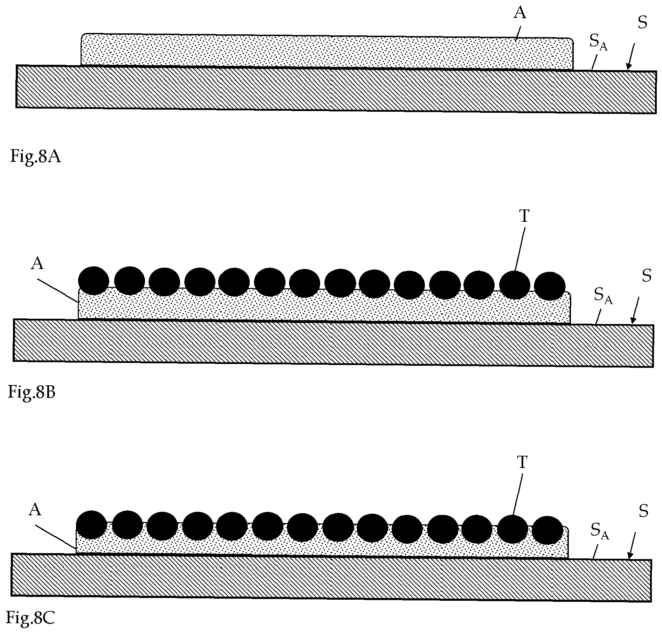

As schematically illustrated in the example of Figures 8A - 8C, on the adhesive material A deposited by the screen printing station 20 (Figure 8A) seeds T are distributed by gravity which penetrate the adhesive material A by reason of the weight force and vibrations caused by the mechanical actuators 70 for at least 25% of the average particle size of the seeds (Figure 8B) as described above.

At the outlet of the drying station 50, the adhesive material A is only partially dried, consequently, the subsequent pressing step performed by the calendering station 90 allows the seeds T deposited on the adhesive material A to be immersed at least up to 33% of the average particle size of the seeds T (Figure 8C), preferably up to 66% of the average particle size of the seeds T. Thanks to the partial drying of the layer of adhesive material, the calendering can take place without altering the printed pattern.

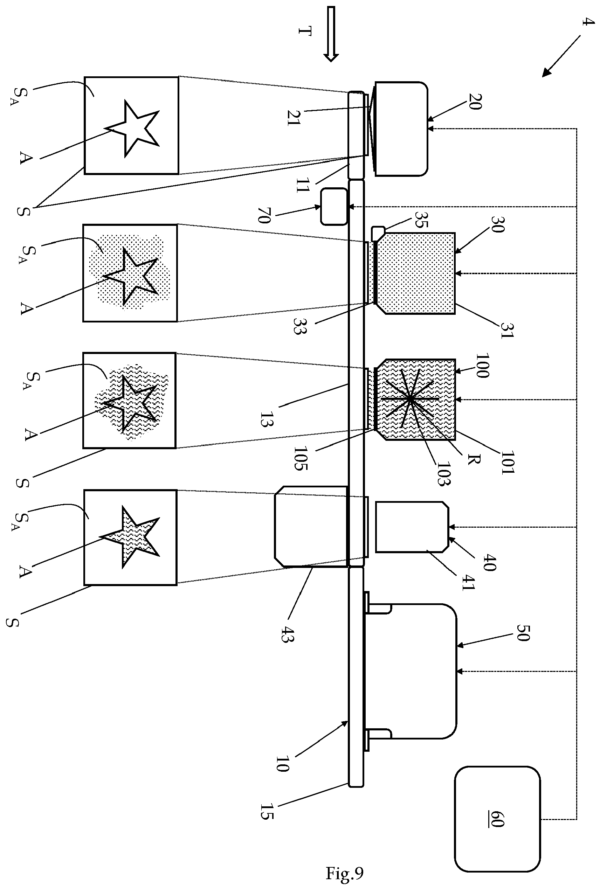

Figure 9 illustrates a printing plant 4 according to a fourth alternative embodiment of the present invention, which differs from the plants 1-3 described above as follows, where elements similar to elements described above in relation to plants 1-3 are indicated by the same reference numerals and their description is not repeated for brevity's sake.

In particular, the plant 4 includes a fibre deposition station or flocking station 100 located downstream of the seed deposition station 30. In the example considered, the fibre deposition station 100 is configured to deposit the portions of fibre by gravity. Preferably, the deposited fibres are biodegradable fibres, for example cotton fibres.

In detail, the flocking station comprises a tank 101 which contains portions of fibre to be deposited on the substrate S and houses a brush 103 having similar characteristics to the brush movement element described above with reference to the plant 1. Finally, there is provided a sieve 105 mounted at an (lower) opening of the tank 101 with meshes such that the fibres contained in the tank 101 can pass through. The brush element 103 rotates about a rotation axis R parallel to the plane defined by the sieve 105, and comprises radially arranged brush elements having a length such that they come into contact with the sieve 105.

The plant 4 further provides that the removal and recovery station 40 is positioned downstream of the flocking station 100 (considering the direction of movement of the conveyor belt 10 indicated by an arrow in Figure 9). In this case, the removal and recovery station 40 is configured to remove portions of fibre not fixed to the adhesive material A along with the seeds in excess from the surface S_{A} of the substrate S. In addition, the removal and recovery station 40 includes means (not illustrated) for separating the seeds and fibres - for example, based on the weight - and reintroducing the seeds and fibres to the tanks 31 and 101 of the respective deposition stations 30 and 100.

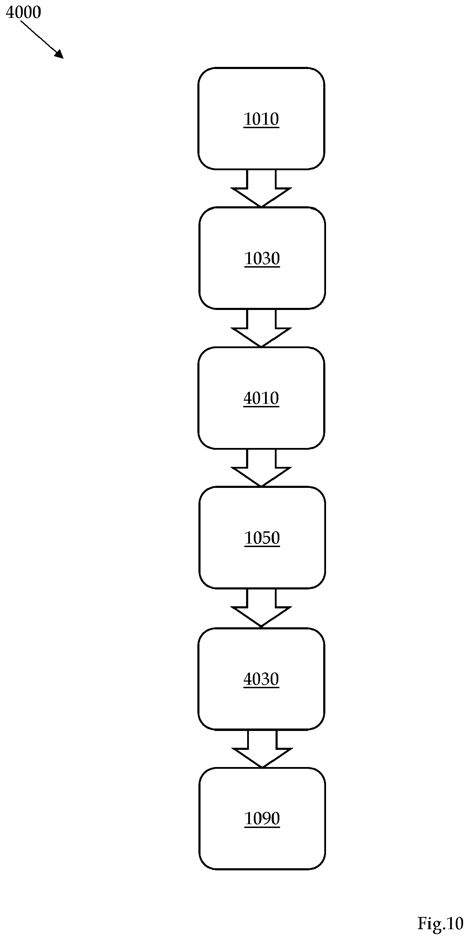

Figure 10 illustrates a flowchart of a seed printing process 4000 according to a fourth alternative embodiment, which may be performed by means of the plant 4. The process of Figure 10 differs from the processes 1000 - 3000 described above as follows, where blocks similar to the blocks described above in relation to the processes 1000 - 3000 are indicated by the same reference numbers and their description is not repeated for brevity's sake.

In detail, following the deposition of the layer of adhesive material A (block 1010) and the deposition of seeds (block 1030) on the surface S_{A} of the substrate S, the deposition of a plurality of fibres on the surface S_{A} of the substrate S is provided (block 4010). In particular, at least a part of the fibres is deposited on the layer of adhesive material A, where it overlaps with the previously deposited seeds. In the case of the plant 4, the fibres are deposited by the fibre deposition station 100 as the transiting substrate S passes through it.

In addition, vibrational stress of the substrate S (block 1050) also takes place at the fibre deposition station 100.

In addition, instead of the step of removing the seeds (1070), an optional step (block 4030) of removing both the plant seeds and the excess fibres - i.e., not in contact with the adhesive layer A - from the surface S_{A} of the substrate S takes place. In the case of the plant 4, this operation is carried out by the removal and recovery station 40 modified as described above, before the drying of the adhesive material A is performed (block 1090).

Thus, the substrate S presents the desired printing pattern on the surface S_{A} printed with the seeds and the fibres. Subsequently, the substrate S may be stored or subjected to other processing - for example, die-cutting and folding operations so as to make a box-shaped element.

The above examples must not be interpreted in a limiting sense and the invention thus conceived is susceptible of numerous modifications and variations.

For example, in more complex embodiments (not illustrated), the layer of adhesive material is deposited by means of an apparatus comprising one or more movable nozzles through which the layer of adhesive material is deposited according to the desired printing pattern. In such a case, the thickness of the layer of adhesive material is adjusted by controlling the flow of adhesive material dispensed and/or by repeating the operation of deposition of the adhesive material one or more times.

In addition or as an alternative, screen printing can be performed in a station separate from the rest of the plant. In such a case, the conveyor belt does not comprise the first portion and the substrate is transferred on the conveyor belt so as to pass through the seed deposition station, possibly, the fibre deposition station, the mechanical actuators and the drying station, and again the brushing station, at a later time by a human operator or by an electromechanical apparatus.

Again, nothing prevents from providing a transfer apparatus different from the first portion of the conveyor belt to transfer the substrate from the screen printing station to the rest of the plant.

In other embodiments (not illustrated), a dispensing control system based on a suction element may be provided, for example, an auger that sucks seeds from the tank and dispenses them onto the substrate generating an air blade, possibly, achieving at the same time a partial drying of the adhesive material.

In different embodiments (not illustrated), there are provided two or more sieves and/or plates aligned along the direction of the force of gravity so as to obtain better control of the amount of seed dispensed and/or the distribution thereof on the surface of the substrate.

Still, in another embodiment (not illustrated), a pre-set amount of seeds - for example, defined based on the weight - is deposited by gravity, for example, by controlling the opening and closing of a shutter synchronized with the transition of the substrate below (in the direction of the force of gravity) said shutter.

Further, nothing prevents from using a different seed movement element such as a rotating paddle or a blade inclined or orthogonal to the sieve and configured to move back and forth along a direction of length or width of the sieve.

In addition, nothing prevents from using electric fields to orient and deposit the fibres on the surface of the substrate to be printed. In such a case, the plant preferably includes a barrier positioned between the seed deposition station and the flocking station. In detail, the barrier is a wall substantially orthogonal to the portion of the conveyor belt and provided with an opening configured to allow the transit of the substrate from the seed deposition station to the flocking station, and at the same time to prevent the portions of fibre from being deposited on the substrate as soon as it leaves the seed deposition station. Indeed, the Applicant has determined that the barrier prevents a non-uniform accumulation of the fibres on the adhesive material due to the difference in electrical charge between the substrate and the portions of fibre, which causes the fibres to couple to the surface of the substrate and, in particular of the adhesive material, when the substrate has not yet reached the flocking station.

Again, nothing prevents from realising simpler embodiments (not illustrated) in which the control unit is not provided or in which the control unit has control over a subset of the stations and/or stages of the plant. In this case, an operator will operate the stations or stages that are not automatically controlled by means of a suitable user interface provided on them.

Dually, nothing prevents from realising a more complex plant (not illustrated) in which each station comprises a control unit that is independent and/or controlled by a general control module of the plant.

In compact embodiments (not illustrated), the seed removal and recovery station and the drying station are integrated into a single station. Preferably, the flow of air that removes seeds and possibly excess fibres contributes at least partially to the drying of the adhesive material.

Finally, it will be clear to the person skilled in the art how two or more of the plants 1 - 4 may be combined into a single plant formed by a combination of the described stations of the corresponding plants.

As will still be apparent to the skilled person in the art, one or more steps of the processes 1000 - 4000 described above may be performed in parallel between them - such as the steps relating to the blocks 1030, 1050 and/or 4010 - or in a different order from that presented above - like in the case of the blocks 1050 and 2010. Similarly, one or more optional steps may be added to or removed from one or more of the processes described above.

Again, it will be apparent that two or more of the processes 1000 - 4000 may be combined with each other in order to obtain a process incorporating the steps provided by the combined processes.

Furthermore, all the details can be replaced with other technically-equivalent elements.

In conclusion, the materials used, as well as the contingent shapes and dimensions of the aforementioned devices, apparatuses and terminals, may be any according to the specific implementation requirements without thereby abandoning the scope of protection of the following claims.

## Claims

1. Printing process (1000; 2000; 3000; 4000) implementable through a printing plant comprising at least one screen printing station (20), at least one station for deposition (30) of a printing preparation, at least one drying station (50), and at least one transport element (10) configured to transport a substrate (S) from one station to the next one along a transport direction (T), **characterized in that** it comprises steps consisting of:
- applying (1010) by screen printing a layer of adhesive material on a surface of the substrate (S) using the at least one screen printing station (20), wherein the adhesive material is arranged on the substrate in a pre-set pattern;
- depositing (1030) by gravity a printing preparation on the substrate surface by the at least one printing preparation deposition station (30), wherein the printing preparation comprises at least a plurality of granular organic printing elements, such as plant seeds; and
- drying (1090; 3010) the adhesive material by means of the at least one drying station (50), thereby fixing the printing elements to the adhesive material.

2. Process (1000; 2000; 3000; 4000) according to claim 1, wherein the deposition station (30) comprises a tank (31) and a sieve (33) wherein the sieve (33) is coupled to the tank (31) so as to engage an opening thereof (31) facing the transport element (10), the step of depositing by gravity a plurality of seeds comprising:
- sifting the plurality of printing elements by means of the sieve (33) interposed between the tank (31) and said surface of the substrate, wherein the sieve (33) comprises meshes or holes having a regular polygon shape or circular shape organized in rows and columns or with a radial distribution.

3. Process (1000; 2000; 3000; 4000) according to claim 2, wherein the sieve (33) comprises substantially square meshes with a side equal to at least 1.5 times the average particle size of the printing elements, more preferably to at least 3 times the average particle size of the printing elements, or holes having a diameter equal to at least 1.5 times the average particle size of the printing elements, more preferably equal to at least 3 times the average particle size of the printing elements.

4. Process (1000; 2000; 3000; 4000) according to claim 2 or 3, wherein the step of depositing by gravity a plurality of printing elements comprises:
- subjecting the sieve (33) to vibratory stress by means of a movement element (35) included in the deposition station (30), or
- scraping a surface of the sieve (33) facing the tank (31) by means of a brush, said brush preferably rotating around an axis parallel to said surface of the sieve.

5. Process (1000; 2000; 3000; 4000) according to any one of the preceding claims, further comprising the step of:
- subjecting (1050) said substrate to vibratory stress after deposition of said plurality of printing elements and before drying the adhesive layer.

6. Process (1000; 2000; 3000; 4000) according to any one of the preceding claims, wherein the step of applying (1010) a layer of adhesive material to a surface of a substrate comprises:
- applying an adhesive layer with a thickness comprised between 20% and 70%, preferably between 33% and 66%, of an average particle size of the printing elements.

7. Process (2000) according to any one of the preceding claims, further comprising the steps of:
- imprinting (2010) a bas-relief shaped so as to correspond to said pre-set pattern, wherein said bas-relief preferably has a depth equal to at least 33% of the average particle size of the printing elements, more preferably comprised between 33% and 75% of the average particle size of the printing elements, and less than 80% of the thickness of the substrate, even more preferably less than 75% of the thickness of the substrate, and
wherein the step of applying (1010) a layer of adhesive material to a surface of a substrate provides for applying the layer of adhesive material at said bas-relief.

8. Process(3000) according to any one of the preceding claims, wherein the step of drying (1070; 3010) the adhesive material comprises:
- partially drying (3010) the adhesive material, and
wherein the process (3000) further comprises the step of:
- exerting pressure (3030) on the printing elements after said partial drying of the adhesive material by means of a calendering station (90) located downstream of the drying station (50) with respect to the transport direction (T), thereby causing further penetration of the printing elements into the layer of adhesive material.

9. Process (4000) according to any one of the preceding claims, further comprising the steps of:
- depositing (4010) a layer of fibres, preferably biodegradable, on the surface of said substrate, after the deposition of said plurality of printing elements, by means of a flocking station (100) located downstream of the deposition station (30) with respect to the transport direction (T), and
- removing (4030) an excess of said biodegradable fibres from the surface of said substrate, before drying the adhesive material.

10. Process (1000; 2000; 3000; 4000) according to any one of the preceding claims,
- wherein said printing elements comprise a plurality of plant seeds having an average particle size comprised between 100 µm and 700 µm, preferably comprised between 200 µm and 500 µm, even more preferably comprised between 300 µm and 400 µm; and
wherein, preferably, the substrate is made of a biodegradable material and the adhesive material is of the biodegradable type.

11. Printing plant (1 ;2;3;4) comprising:
- at least one screen printing station (20) configured to deposit a layer of adhesive material on a surface of a substrate (S) according to a pre-set pattern;
- at least one deposition station (30) of a printing preparation comprising a plurality of granular organic printing elements, such as plant seeds, configured to deposit a plurality of printing elements on the surface of said substrate (S);
- at least one drying station (50) configured to dry the layer of adhesive material, and
- at least one transport element (10) configured to transport said substrate from one station to the next one along a transport direction (T).

12. Plant (1;2;3;4) according to claim 11, wherein:
the deposition station (30) comprises a tank (31) and a sieve (33), wherein the sieve (33) is coupled to the tank (31) so as to engage an opening thereof facing the transport element (10), the sieve (33) comprising
- substantially square meshes with a side equal to at least 1.5 times the average particle size of the printing elements, more preferably to at least 3 times the average particle size of the printing elements, or
- holes having a diameter equal to at least 1.5 times the average particle size of the printing elements, preferably equal to at least 3 times the average particle size of the printing elements.

13. Plant (1;2;3;4) according to claim 11 or 12, comprising a punching station (80) located upstream of the screen printing station (20) with respect to the transport direction (T) and comprising a punch (81) configured to imprint a bas-relief (B) on the substrate (S) corresponding to said pre-set pattern.

14. Plant (1;2;3;4) according to any one of claims 11 to 13, comprising a calendering station (90) configured to exert pressure along a direction orthogonal to the transport direction (T) on the plurality of printing elements deposited on the surface of the substrate (S) located at an outlet of the drying station (50) or directly downstream thereof (50) with respect to the transport direction (T).

15. Plant (1;2;3;4) according to any one of claims 11 to 14, comprising a flocking station (100) located downstream of the deposition station (30) and configured to deposit portions of fibre by gravity.
